# EUROPEAN PATENT SPECIFICATION

(11) **EP 3 757 420 B1**
(45) Date of publication and mention of the grant of the patent: **25.09.2024**
(21) Application number: 19182297.2
(22) Date of filing: 25.06.2019
(51) Int. Cl.: F16F 15/121, F16F 15/16

(54) **COUPLING**
KOPPLUNG
COUPLAGE

(43) Date of publication of application: 30.12.2020
(73) Proprietor: Geislinger Group GmbH, 5300 Hallwang (AT)
(72) Inventor: Geislinger, Matthias, 5300 Hallwang (AT)
(74) Representative: Beck & Rössig European Patent Attorneys

(56) References cited:
- EP-A2- 1 304 500
- DE-A1- 3 115 788
- US-A1- 2012 181 734

## Description

The present invention relates to a coupling that may be deployed in a drive train for transmitting torque from a driving element to a driven element while at the same time reducing torsional vibrations.

Corresponding couplings of the applicant that include leaf springs for transmission of torque and oil gaps for providing hydraulic damping of mechanical vibrations are generally known e.g. from EP 1 304 500 B1, EP 2 206 933 B1, and EP 2 725 249 B1. Upon relative rotation of the movable parts of the coupling, the leaf springs deform elastically while at the same time displaced damping medium is forced through the oil gaps to thereby cause a damping effect.

Couplings of this type can be used in large two-stroke and four-stroke diesel engines and gas engines for counteracting torsional vibrations in the drive train. The coupling, which may have an outer diameter of up to three meters, is, for example, flanged to a crankshaft of the engine. However, couplings of the type mentioned above can also be used on other rotating parts such as camshafts, intermediate shafts, axle drive shafts, and gearboxes.

In order to dampen torsional vibrations to a permissible amount, for example in a ship propulsion system, conventionally, a torsional vibration damper is connected to a fly wheel arranged at the crank-shaft of the engine while a further torsionally flexible coupling connects the torsional vibration damper to the gearbox for driving the propeller of the propulsion system. In EP 1 304 500 B1, applicant proposed integrating both devices namely the torsional vibration damper and the torsionally flexible coupling in a single coupling. However, it was felt that in certain, in particular acoustically sensitive implementations the reduction of torsional vibrations requires further improvement.

A coupling comprising the features of the preamble portion of claim 1 is known from US 2012/0181734 A1. In this coupling, the first and second leaf springs are Z-shaped and thus are inclined to the radial direction in order to absorb radial forces in a flexible manner. Spaces accommodating the first and second leaf springs are connected by an annulus which is said to be filled with a fluid to dampen orbital movement of the internal body.

Thus, the object of the present invention is to provide an alternative solution for such an integrated coupling exhibiting a more advanced reduction of torsional vibrations.

This technical problem is solved by a coupling as defined in claim 1.

As compared to EP 1 304 500 B1, the inventive design separates the two damping systems within the coupling via extended oil gaps so that both damping systems can be tuned practically independently.

The invention is able to prevent leakage of damping medium between the first and second chambers, which cannot be avoided in EP 1 304 500 B1 because of the presence of very short common oil gaps.

Moreover, since in the present invention the internal body is encapsulated by the outer housing and hub, the total number of sealings can be reduced drastically, which significantly reduces the risk of leakage to the outside and equally reduces corresponding production expenses.

In addition, a reduced number of dynamic sealings is also beneficial in respect of low friction.

Further, the mass of the internal body can be adjusted as required in a very flexible way. E.g. a high mass of inertia of the internal body may be used for blocking or attenuating acoustic vibrations, i.e. structure-borne sound, whereas a low mass may be preferred for a torsionally soft two-stage coupling.

The inventive coupling is particularly suitable for acoustically sensitive applications.

It is also to be noted that the inventive coupling will be more compact than the design suggested by EP 1 304 500 B1. In other words, the inventive coupling is able to provide a larger torsional displacement angle per volume than the coupling of EP 1 304 500 B1.

Advantageous embodiments of the invention are indicated in further claims.

In one embodiment, the first chambers are hydraulically isolated from said second chambers, i.e. there is no common oil gap between the first and second chambers in circumferential direction, so that both damping systems can be tuned completely independently and free of any leakage between the first and second chambers.

In a further embodiment, the internal body is formed with outer pockets for defining the first chambers and for receiving the first leaf springs.

Further, the internal body may as well be formed with inner pockets for defining the second chambers and for receiving the second leaf springs.

By providing pockets on the internal body for the first and/or second chambers, the structure of the outer housing and the hub can be kept simple, thereby reducing manufacturing expenses.

In a further embodiment, outer pockets and inner pockets are arranged alternately in circumferential direction, while preferably, the first and second pockets are hydraulically isolated from each other. However, in some cases, the number of inner and outer pockets may be different, but the first and second pockets may still be distributed uniformly in circumferential direction.

Generally, the leaf springs may be arranged in a way that one of their ends is clamped in a slot for supporting bending moments whereas the tip at the opposite end of the leaf spring loosely engages a groove to thereby form a flexible joint that does not transmit bending moments but merely serves the purpose of supporting circumferential forces.

In a further embodiment the inner tip portions of the first leaf springs are engaged with grooves formed at the bottom of the outer pockets of the internal body. The outer end portions of the first leaf springs are secured to the outer housing.

Further, the outer end portions of the second leaf springs may be clampingly secured to the internal body by slots formed at the top of said inner pockets of said internal body, whereas inner tip portions engage grooves formed at the hub.

In a further embodiment the outer housing is formed by an outer ring for clamping the outer end portions of the first leaf springs, and two side walls connected to the outer ring and arranged opposite to each other for laterally delimiting said inner space of the coupling. This enhances assembly of the coupling.

Further, the side walls may be designed as required. E.g. it is possible to use at least one of the side walls optionally as a fly wheel.

Moreover, the outer housing may be sealed against the hub at these side walls via sealing rings. Since the outer housing and the hub fully encapsulate the internal body, no further sealing of surfaces that are movable relative to each other is required.

In a further embodiment one of the side walls of the outer housing is configured to be coupled to one of the driving element and driven element of the drive train. This side wall may optionally work as a fly wheel of an engine or the like.

In a further embodiment the hub is formed with a flange portion for connection to one of the driving element and the driven element of the drive train.

The lateral walls of the outer pockets may be provided with recesses or cut-outs for said protrusions in circumferential direction for increasing the maximum torsional displacement between the outer housing and the internal body.

### Brief description of the drawings:

- Figure 1: is a semi-sectional view of a coupling according to a first exemplary embodiment,
- Figure 2: is a schematic cross-sectional view of the coupling of figure 1.

The following description of illustrative embodiments according to principles of the present invention is intended to be read in connection with the accompanying drawings, which are to be considered part of the entire disclosure.

The features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

This disclosure describes the best mode or modes of practicing the invention as presently contemplated. This description is not intended to be understood in a limiting sense, but provides an example of the invention presented solely for illustrative purposes by reference to the accompanying drawings to advise one of ordinary skill in the art of the advantages and construction of the invention. In the various views of the drawings, like reference characters designate like or similar parts.

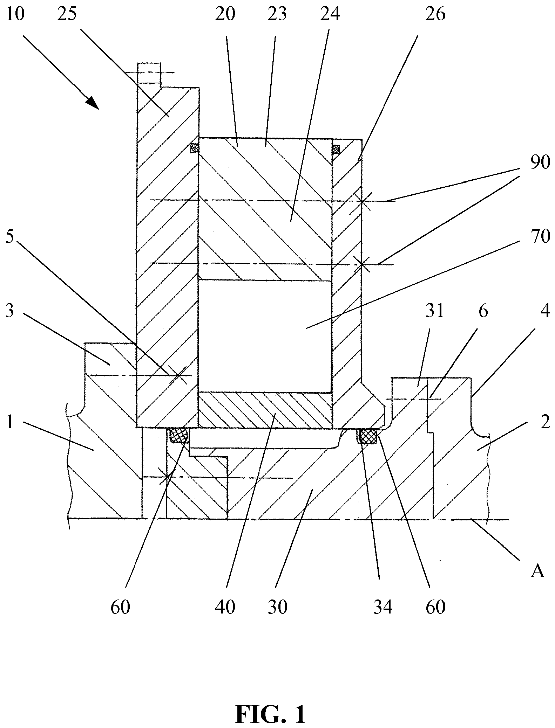

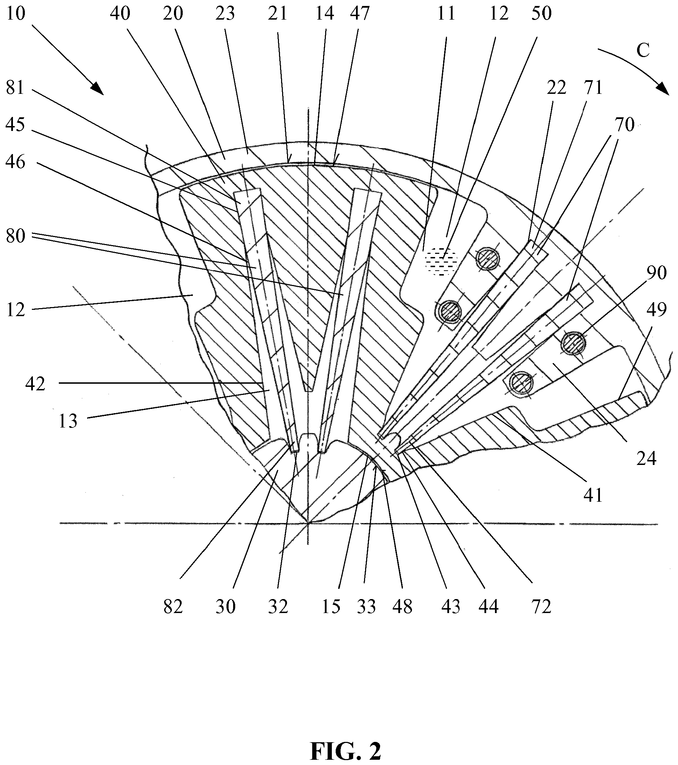

Figures 1 and 2 show a coupling 10 for arrangement in a drive train between a driving element 1 and a driven element 2 as well as their common axis of rotation A. The driving element 1 may be a crankshaft of an engine or the like while the driven element 2 can be for example a gearbox. Each element 1 or 2 may be provided with a flange portion 3 and 4 for connection with the coupling 10 by means of fasteners 5 and 6 such as screws or the like.

The coupling 10 comprises an outer housing 20 which is configured to be coupled to one of the driving element 1 and the driven element 2. In the embodiment shown the outer housing 20 is coupled to the driving element 1.

Further, the coupling 10 comprises a hub 30 arranged centrally within the outer housing 20. The hub 30 is configured to be coupled coaxially to the other of said driving element 1 and driven element 2, here the driven element 2 of said drive train. The hub 30 may be formed with a flange portion 31 for connection with the flange portion 4 of the driven element 2.

The outer housing 20 and the hub 30 define an inner space 11 of the coupling 10 for enclosing an internal body 40. This inner space 11 is generally annular in shape and extends around the hub 30. Accordingly, the internal body 40 within said inner space 11 extends around the hub 30 and is movable relative to the outer housing 20 as well as to the hub 30 in circumferential direction C around the hub 30. The internal body 40 is encapsulated completely within said inner space 11 and thus has no portion exposed to the exteri or.

The internal space 11 of the coupling 10 is filled with a damping medium 50 such as oil. Accordingly, the internal space 11 is sealed against the exterior by sealing means, for example two sealing rings 60 disposed between the outer housing 20 and the hub 30.

Relative rotation in circumferential direction C between the outer housing 20 and the internal body 40 is delimited by a first set of leaf springs 70 while relative rotation in circumferential direction C between the hub 30 and the internal body 40 is delimited by a second set of leaf springs 80 which are arranged independently of and separately from the first set of leaf springs 70.

The first and second leaf springs 70 and 80 are configured to deform elastically upon relative rotation between the outer housing 20 and internal body 40 and between the hub 30 and internal body 40.

The first and second leaf springs 70 and 80 are arranged in dedicated first and second chambers 12 and 13 of the inner space 11. The first chambers 12 are formed between the outer housing 20 and the internal body 40 whereas the second chambers 13 are formed between the hub 30 and the internal body 40. The first chambers 12 and the second chambers 13 are provided separately from each other. They do not communicate with each other in circumferential direction C.

As shown in figure 2, the first chambers 12 may be substantially defined by outer pockets 41 at the outer circumference of the internal body 40 whereas the second chambers 13 may be substantially defined as inner pockets 42 at the inner circumference of the internal body 40. The outer pockets 41 open towards an inner wall 21 of the outer housing 20, i.e. a wall facing radially inwards, whereas the inner pockets 42 open in an opposite direction, i.e. radially inwardly towards an outer circumference of the hub 30.

The first leaf springs 70, which are arranged in said first chambers 12, connect the outer housing 20 and the internal body 40. They extend radially inwardly from the outer housing 20 towards the internal body 40 and are configured to deform elastically upon relative rotation between the outer housing 20 and the internal body 40.

The second leaf springs 80 arranged in said second chambers 13 connect the internal body 40 and the hub 30. They extend radially outwardly from the hub 30 towards the internal body 40 and are configured to deform elastically upon relative rotation between the hub 30 and the internal body 40.

Figure 2 shows, merely by example, a pair of two leaf springs 70 and 80 in each chamber 12 and 13, respectively. However the number of leaf springs per chamber may be smaller or larger than shown. Moreover, it is possible to use spring packages consisting of several leaf springs instead of individual leaf springs 70 and 80. In one mode of the invention, the leaf springs 70 and 80 in each chamber 12 and 13 are spaced apart from each other to thereby reduce internal friction of the coupling 10.

The leaf springs 70 and 80 each have a first end portion which is clampingly secured on one of the outer housing 20, the hub 30 and the internal body 40, e.g. clamped in a slot provided thereon, while the second opposite tip end portion loosely engages a groove for mainly supporting forces in circumferential direction C.

Preferably, the first leaf springs 70 are arranged in a way that their first end portions 71 are respectively clamped by corresponding slots 22 at the outer housing 20. The inner tip portions 72 of the first leaf springs 70 are respectively engaged with grooves 43 formed at the bottom 44 of the outer pockets 41 of the internal body 40.

Further, as shown in Figure 2, the second leaf springs 80 in the second chambers 13 may be clamped at their first outer end portions 81 by slots 45 formed at the top 46 of the inner pockets 42 of the internal body 40. Inner tip portions 82 of the second leaf springs 80 extend into grooves 32 formed at the outer circumference of the hub 30.

Upon elastic deformation of the leaf springs 70 and 80 damping medium in the first and second chambers 12 and 13 is displaced via corresponding oil gaps 14 and 15 connecting neighbouring first chambers 12 and connecting neighbouring second chambers 13, respectively.

Figure 2 shows first oil gaps 14 formed between an inner wall 21 of the outer housing 20 facing radially inwardly and an outer wall 47 of the internal body 40 facing radially outwardly to thereby establish throttled fluid communication between two neighbouring first chambers 12 for providing hydraulic damping. The first oil gaps 14 stretch radially around the outside of the second chambers 13.

Similarly, second oil gaps 15 are provided between neighbouring second chambers 13. The second oil gaps 15 are formed between an inner wall 48 of the internal body 40 facing the radially inwardly and an outer wall 33 of the hub 30 facing radially outwardly to thereby establish throttled fluid communication between two neighbouring second chambers 13 for providing hydraulic damping. The second oil gaps 15 pass the first chambers 12 radially inwardly of the bottom 44 of the outer pockets 41.

Both damping systems are substantially independent of each other since the corresponding chambers 12 and 13 and oil gaps 14 and 15 are hydraulically isolated from each other. Accordingly, each damping system can be tuned individually. It is readily apparent from Figure 2, that the pockets 41 and 42 of the internal body 40 are hydraulically separate from each other in circumferential direction C. In other words, the internal body 40 prevents leakage between the two damping systems. Moreover, the extended length of the oil gaps 14 and 15 is beneficial for damping.

The outer housing 20 comprises an outer ring 23 for securing the outer end portions 71 of the first leaf springs 70. The outer ring 23 has interior protrusions 24 which are provided with the slots 22 for receiving the outer end portions 71 of the first leaf springs 70. The interior protrusions 24 may be integrally formed with the outer ring 23 or otherwise attached thereto.

As is readily apparent from Figure 2, the outer diameter of the internal body 40 extends radially beyond the largest possible circle that can be drawn radially within the inner ends of said interior protrusions 24. In other words, the internal body 40 extends radially outwardly into a space between said interior protrusions 24.

The lateral walls of the outer pockets 41 may be provided with recesses or cut-outs 49 in circumferential direction C for said interior protrusions 24 to thereby enlarge the maximum torsional displacement between the outer housing 20 and the internal body 40.

Further, the outer housing 20 includes two side walls 25 and 26 that abut the axial front faces of the outer ring 23. The side walls 25 and 26 may generally be formed as annular discs and are arranged opposite to each other to thereby laterally delimit the inner space 11 of the coupling 10. They may be secured against each other by means of fasteners 90 with the outer ring 23 being clamped between them. Moreover, the side walls 25 and 26 are engaged with outer wall portions 34 of the inner hub 30 via the sealing rings 60.

One of the side walls 25 is configured to be coupled to one of the driving element 1 and driven element 2, here the driving element 1.

Further, at least one of the side walls 25 and 26, here side wall 25 may optionally be formed as a flywheel of an engine, so that a separate flywheel may be dispensed with.

The interior body 40 may be provided with substantial inertial mass so that the coupling 10 may operate as a dual mass flywheel. E.g. the mass of the interior body 40 may be designed sufficient for blocking or attenuating vibrations at acoustically relevant frequencies, in which case the coupling 10 will be particularly suitable for acoustically sensitive applications.

Alternatively, if the mass of the interior body 40 is kept low, the coupling 10 may operate as a very soft two-stage coupling with dedicated damping characteristics because of the two independent damping systems.

Moreover, the configuration as described above results in a very compact design that in addition reduces manufacturing expenses in respect of the sealing means required for sealing the inner chamber 11, which is filled with damping medium 50, against the exterior.

The reduced number of dynamic sealings is also beneficial for reduced internal friction.

In summary, the invention results in a single unitary device that is able to reduce torsional vibrations to an extremely low level unmatched in the art.

## Claims

1. Coupling (10), comprising:
an outer housing (20) configured to be coupled to one of a driving element (1) and driven element (2) of a drive train,
a hub (30) configured to be coupled to the other of said driving element (1) and driven element (2) of said drive train,
an inner space (11) enclosed by the outer housing (20) and the hub (30),
an internal body (40) arranged within said inner space (11), extending around the hub (30) and being movable relative to the outer housing (20) and the hub (30) in a circumferential direction around the hub (30),
a plurality of first chambers (12) formed between the outer housing and the internal body (40),
a plurality of second chambers (13) formed between the internal body (40) and the hub (30),
first leaf springs (70) arranged in said first chambers (12), said first leaf springs (70) connecting the outer housing (20) and the internal body (40) and extending 2. radially inwardly from the outer housing (20) towards the internal body (40) and being configured to deform elastically upon relative rotation between the outer housing (20) and the internal body (40),
second leaf springs (80) arranged in said second chambers (13), said second leaf springs (80) connecting the internal body (40) and the hub (30) and extending radially outwardly from the hub (30) towards the internal body (40) and being configured to deform elastically upon relative rotation between the hub (30) and the internal body (40),
first oil gaps (14) are formed between an inner wall (21) of the outer housing (20) facing radially inwardly and an outer wall (47) of the internal body (40) facing radially outwardly thereby establishing throttled fluid communication between neighbouring first chambers (12) for providing hydraulic damping,
second oil gaps (15) are formed between an inner wall of the internal body (40) facing the radially inwardly and an outer wall of the hub (30) facing radially outwardly thereby establishing throttled fluid communication between neighbouring second chambers (13) for providing hydraulic damping, and **characterized in that**
the outer housing (20) is provided with interior protrusions (24), extending radially inwardly, said interior protrusions (24) being configured to clampingly secure outer end portions (71) of the first leaf springs (70), and that the outer diameter of the internal body (40) extends radially beyond the largest possible circle radially within the inner ends of said interior protrusions (24).

2. Coupling (10) according to claim 1, **characterised in that** said first chambers (12) are hydraulically isolated from said second chambers (13).

3. Coupling (10) according to claim 1 or 2, **characterised in that** said internal body (40) is formed with outer pockets (41) for defining the first chambers (12) and for receiving the first leaf springs (70).

4. Coupling (10) according to claim 3, **characterised in that** inner tip portions (72) of the first leaf springs (70) are engaged with grooves (43) formed at the bottom (44) of said outer pockets (41) of said internal body (40).

5. Coupling (10) according to one of claim 1 to 4, **characterised in that** said internal body (40) is formed with inner pockets (42) for defining the second chambers (13) and for receiving the second leaf springs (80).

6. Coupling (10) according to claim 5, **characterised in that** outer end portions (81) of the second leaf springs (80) are clamped to the internal body (40) by slots (45) formed at the top (46) of said inner pockets (42) of said internal body (40).

7. Coupling (10) according to claim 5 or 6, **characterised in that** outer pockets (41) and inner pockets (42) are arranged alternately in circumferential direction and are hydraulically isolated from each other.

8. Coupling (10) according to one of claims 1 to 7, **characterised in that** the outer housing (20) is formed by an outer ring (23) for securing the outer end portions (71) of the first leaf springs (70), and two side walls (25, 26) connected to the outer ring (23) and arranged opposite to each other for laterally delimiting said inner space (11).

9. Coupling (10) according to one of claims 1 to 8, **characterised in that** said side walls (25, 26) of the outer housing (20) are engaged with outer wall portions (34) of the hub (30) via sealing rings (60) to thereby encapsulate the inner space (11).

10. Coupling (10) according to one of claims 1 to 9, **characterised in that** at least one of the side walls (25) of the outer housing (20) forms a fly wheel.

11. Coupling (10) according to one of claims 1 to 10, **characterised in that** one of the side walls (25) of the outer housing (20) is configured to be coupled to one of a driving element (1) and driven element (2) of the drive train.

12. Coupling (10) according to one of claims 1 to 11, **characterised in that** hub (30) is formed with a flange portion (31) for connection to one of the driving element (1) and the driven element (2) of the drive train.

13. Coupling (10) according to claim 12, **characterised in that** lateral walls of the outer pockets (41) in circumferential direction are provided with recesses or cut-outs (49) for said internal protrusions (24).

## Patentansprüche

1. Kupplung (10), umfassend:
ein äußeres Gehäuse (20), das dazu konfiguriert ist, mit einem aus einem antreibenden Element (1) und einem angetriebenen Element (2) eines Antriebsstrangs gekoppelt zu werden,
eine Nabe (30), die dazu konfiguriert ist, mit dem anderen aus dem antreibenden Element (1) und dem angetriebenen Element (2) des Antriebsstrangs gekoppelt zu werden,
einen inneren Raum (11), der von dem äußeren Gehäuse (20) und der Nabe (30) umschlossen ist,
einen inneren Körper (40), der in dem inneren Raum (11) angeordnet ist, sich um die Nabe (30) herum erstreckt und relativ zu dem äußeren Gehäuse (20) und der Nabe (30) in einer Umfangsrichtung um die Nabe (30) herum bewegbar ist,
eine Vielzahl von ersten Kammern (12), die zwischen dem äußeren Gehäuse und dem inneren Körper (40) ausgebildet sind,
eine Vielzahl von zweiten Kammern (13), die zwischen dem inneren Körper (40) und der Nabe (30) ausgebildet sind,
erste Blattfedern (70), die in den ersten Kammern (12) angeordnet sind, wobei die ersten Blattfedern (70) das äußere Gehäuse (20) und den inneren Körper (40) verbinden und sich von dem äußeren Gehäuse (20) radial nach innen in Richtung des inneren Körpers (40) erstrecken und dazu konfiguriert sind, sich bei einer relativen Drehung zwischen dem äußeren Gehäuse (20) und dem inneren Körper (40) elastisch zu verformen,
zweite Blattfedern (80), die in den zweiten Kammern (13) angeordnet sind, wobei die zweiten Blattfedern (80) den inneren Körper (40) und die Nabe (30) verbinden und sich von der Nabe (30) radial nach außen in Richtung des inneren Körpers (40) erstrecken und dazu konfiguriert sind, sich bei einer relativen Drehung zwischen der Nabe (30) und dem inneren Körper (40) elastisch zu verformen,
erste Ölspalte (14), die zwischen einer radial nach innen weisenden inneren Wand (21) des äußeren Gehäuses (20) und einer radial nach außen weisenden äußeren Wand (47) des inneren Körpers (40) ausgebildet sind, wodurch eine gedrosselte Fluidverbindung zwischen benachbarten ersten Kammern (12) zur Bereitstellung einer hydraulischen Dämpfung hergestellt wird,
zweite Ölspalte (15), die zwischen einer radial nach innen weisenden inneren Wand des inneren Körpers (40) und einer radial nach außen weisenden äußeren Wand der Nabe (30) ausgebildet sind, wodurch eine gedrosselte Fluidverbindung zwischen benachbarten zweiten Kammern (13) zur Bereitstellung einer hydraulischen Dämpfung hergestellt wird, und
**dadurch gekennzeichnet, dass**
das äußere Gehäuse (20) mit inneren Vorsprüngen (24) versehen ist, die sich radial nach innen erstrecken, wobei die inneren Vorsprünge (24) dazu konfiguriert sind, äußere Endabschnitte (71) der ersten Blattfedern (70) klemmend zu befestigen, und dass sich der Außendurchmesser des inneren Körpers (40) radial über den größtmöglichen Kreis radial innerhalb der inneren Enden der inneren Vorsprünge (24) hinaus erstreckt.

2. Kupplung (10) nach Anspruch 1, **dadurch gekennzeichnet, dass** die ersten Kammern (12) von den zweiten Kammern (13) hydraulisch getrennt sind.

3. Kupplung (10) nach Anspruch 1 oder 2, **dadurch gekennzeichnet, dass** der innere Körper (40) mit äußeren Taschen (41) zum Definieren der ersten Kammern (12) und zum Aufnehmen der ersten Blattfedern (70) ausgebildet ist.

4. Kupplung (10) nach Anspruch 3, **dadurch gekennzeichnet, dass** innere Spitzenabschnitte (72) der ersten Blattfedern (70) in Nuten (43) eingreifen, die am Boden (44) der äußeren Taschen (41) des inneren Körpers (40) ausgebildet sind.

5. Kupplung (10) nach einem der Ansprüche 1 bis 4, **dadurch gekennzeichnet, dass** der innere Körper (40) mit inneren Taschen (42) zum Definieren der zweiten Kammern (13) und zum Aufnehmen der zweiten Blattfedern (80) ausgebildet ist.

6. Kupplung (10) nach Anspruch 5, **dadurch gekennzeichnet, dass** äußere Endabschnitte (81) der zweiten Blattfedern (80) mit dem inneren Körper (40) verklemmt sind durch Schlitze (45), die an der Oberseite (46) der inneren Taschen (42) des inneren Körpers (40) ausgebildet sind.

7. Kupplung (10) nach Anspruch 5 oder 6, **dadurch gekennzeichnet, dass** äußere Taschen (41) und innere Taschen (42) in Umfangsrichtung abwechselnd angeordnet und hydraulisch gegeneinander isoliert sind.

8. Kupplung (10) nach einem der Ansprüche 1 bis 7, **dadurch gekennzeichnet, dass** das äußere Gehäuse (20) durch einen äußeren Ring (23) zur Befestigung der äußeren Endabschnitte (71) der ersten Blattfedern (70) und zwei mit dem äußeren Ring (23) verbundene und einander gegenüberliegend angeordnete Seitenwände (25, 26) zur seitlichen Begrenzung des inneren Raums (11) gebildet ist.

9. Kupplung (10) nach einem der Ansprüche 1 bis 8, **dadurch gekennzeichnet, dass** die Seitenwände (25, 26) des äußeren Gehäuses (20) über Dichtungsringe (60) mit Außenwandabschnitten (34) der Nabe (30) in Eingriff stehen, um dadurch den inneren Raum (11) zu kapseln.

10. Kupplung (10) nach einem der Ansprüche 1 bis 9, **dadurch gekennzeichnet, dass** mindestens eine der Seitenwände (25) des äußeren Gehäuses (20) ein Schwungrad bildet.

11. Kupplung (10) nach einem der Ansprüche 1 bis 10, **dadurch gekennzeichnet, dass** eine der Seitenwände (25) des äußeren Gehäuses (20) dazu konfiguriert ist, mit einem aus einem antreibenden Element (1) und einem angetriebenen Element (2) des Antriebsstrangs gekoppelt zu werden.

12. Kupplung (10) nach einem der Ansprüche 1 bis 11, **dadurch gekennzeichnet, dass** die Nabe (30) mit einem Flanschabschnitt (31) zur Verbindung mit einem aus dem antreibenden Element (1) und dem angetriebenen Element (2) des Antriebsstrangs ausgebildet ist.

13. Kupplung (10) nach Anspruch 12, **dadurch gekennzeichnet, dass** die Seitenwände der äußeren Taschen (41) in Umfangsrichtung mit Aussparungen oder Ausschnitten (49) für die inneren Vorsprünge (24) versehen sind.

## Revendications

1. Couplage (10), comprenant :
un boîtier externe (20) configuré de manière à être couplé à l'un parmi un élément d'entraînement (1) et un élément mené (2) d'une chaîne cinématique, un moyeu (30) configuré de manière à être couplé à l'autre desdits élément d'entraînement (1) et élément mené (2) de ladite chaîne cinématique,
un espace interne (11) entouré par le boîtier externe (20) et le moyeu (30),
un corps interne (40) disposé à l'intérieur dudit espace interne (11), s'étendant autour du moyeu (30) et étant mobile par rapport au boîtier externe (20) et au moyeu (30) dans une direction circonférentielle autour du moyeu (30),
une pluralité de premières chambres (12) formées entre le boîtier externe et le corps interne (40),
une pluralité de deuxièmes chambres (13) formées entre le corps interne (40) et le moyeu (30),
des premiers ressorts à lames (70) disposés dans lesdites premières chambres (12), lesdits premiers ressorts à lames (70) reliant le boîtier externe (20) et le corps interne (40) et s'étendant radialement vers l'intérieur depuis le boîtier externe (20) vers le corps interne (40) et étant configurés de manière à se déformer élastiquement lors d'une rotation relative entre le boîtier externe (20) et le corps interne (40),
des deuxièmes ressorts à lames (80) disposés dans lesdites deuxièmes chambres (13), lesdits deuxièmes ressorts à lames (80) reliant le corps interne (40) et le moyeu (30) et s'étendant radialement vers l'extérieur depuis le moyeu (30) vers le corps interne (40) et étant configurés de manière à se déformer élastiquement lors d'une rotation relative entre le moyeu (30) et le corps interne (40),
des premiers espaces d'huile (14) sont formés entre une paroi interne (21) du boîtier externe (20) orientée radialement vers l'intérieur et une paroi externe (47) du corps interne (40) orientée radialement vers l'extérieur pour établir ainsi une communication fluidique par étranglement entre les premières chambres voisines (12) pour fournir un amortissement hydraulique,
des deuxièmes espaces d'huile (15) sont formés entre une paroi interne du corps interne (40) orientée radialement vers l'intérieur et une paroi externe du moyeu (30) orientée radialement vers l'extérieur pour établir ainsi une communication fluidique par étranglement entre les deuxièmes chambres voisines (13) pour assurer un amortissement hydraulique, et
**caractérisé en ce que**
le boîtier externe (20) est pourvu de protubérances intérieures (24), s'étendant radialement vers l'intérieur, lesdites protubérances intérieures (24) étant configurées de manière à fixer par serrage les parties d'extrémité externes (71) des premiers ressorts à lames (70), et **en ce que** le diamètre extérieur du corps interne (40) s'étend de manière radiale au-delà du plus grand cercle possible radialement à l'intérieur des extrémités internes desdites protubérances intérieures (24).

2. Couplage (10) selon la revendication 1, **caractérisé en ce que** lesdites premières chambres (12) sont isolées hydrauliquement desdites deuxièmes chambres (13).

3. Couplage (10) selon la revendication 1 ou 2, **caractérisé en ce que** ledit corps interne (40) est formé de poches extérieures (41) pour définir les premières chambres (12) et pour recevoir les premiers ressorts à lames (70).

4. Couplage (10) selon la revendication 3, **caractérisé en ce que** les parties de pointe internes (72) des premiers ressorts à lames (70) sont en prise avec les rainures (43) formées au fond (44) desdites poches extérieures (41) dudit corps interne (40).

5. Couplage (10) selon l'une des revendications 1 à 4, **caractérisé en ce que** ledit corps interne (40) est formé de poches intérieures (42) pour définir les deuxièmes chambres (13) et pour recevoir les deuxièmes ressorts à lames (80).

6. Couplage (10) selon la revendication 5, **caractérisé en ce que** les parties d'extrémité externes (81) des deuxièmes ressorts à lames (80) sont bloquées au niveau du corps interne (40) par des fentes (45) formées au sommet (46) desdites poches intérieures (42) dudit corps interne (40).

7. Couplage (10) selon la revendication 5 ou 6, **caractérisé en ce que** les poches extérieures (41) et les poches intérieures (42) sont disposées alternativement dans la direction circonférentielle et sont isolées hydrauliquement les unes des autres.

8. Couplage (10) selon l'une des revendications 1 à 7, **caractérisé en ce que** le boîtier externe (20) est formé par une bague externe (23) pour fixer les parties d'extrémité externes (71) des premiers ressorts à lames (70), et de deux parois latérales (25, 26) reliées à la bague externe (23) et disposées l'une en face de l'autre pour délimiter latéralement ledit espace interne (11).

9. Couplage (10) selon l'une des revendications 1 à 8, **caractérisé en ce que** lesdites parois latérales (25, 26) du boîtier externe (20) sont en prise avec les parties de paroi externe (34) du moyeu (30) via des bagues d'étanchéité (60) pour encapsuler ainsi l'espace interne (11).

10. Couplage (10) selon l'une des revendications 1 à 9, **caractérisé en ce qu'**au moins une des parois latérales (25) du boîtier externe (20) forme un volant d'inertie.

11. Couplage (10) selon l'une des revendications 1 à 10, **caractérisé en ce que** l'une des parois latérales (25) du boîtier externe (20) est configurée de manière à être couplée à l'un parmi un élément d'entraînement (1) et un élément mené (2) de la chaîne cinématique.

12. Couplage (10) selon l'une des revendications 1 à 11, **caractérisé en ce que** le moyeu (30) est formé avec une partie de bride (31) pour le raccordement à l'un parmi l'éléments d'entraînement (1) et l'élément mené (2) de la chaîne cinématique.

13. Couplage (10) selon la revendication 12, **caractérisé en ce que** les parois latérales des poches extérieures (41) dans la direction circonférentielle sont pourvues d'évidements ou de découpes (49) pour lesdites protubérances intérieures (24).
